# EUROPEAN PATENT SPECIFICATION

(11) **EP 3 179 007 B1**
(45) Date of publication and mention of the grant of the patent: **24.04.2019**
(21) Application number: 16200222.4
(22) Date of filing: 23.11.2016
(51) Int. Cl.: E04F 11/18

(54) **ADJUSTABLE GLASS RAIL STRUCTURE**
EINSTELLBARE GLASSCHIENENSTRUKTUR
STRUCTURE DE RAIL DE VERRE RÉGLABLE

(30) Priority: 11.12.2015 FI 20155943
(43) Date of publication of application: 14.06.2017
(73) Proprietor: Oy Steelpro Ltd, 01750 Vantaa (FI)
(72) Inventor: RAHIKKA, Jouko, FI-04350 Tuusula (FI)
(74) Representative: Berggren Oy, Helsinki & Oulu

(56) References cited:
- EP-A1- 2 921 606
- CN-A- 105 003 037
- DE-U1-202010 016 190
- FR-A1- 2 930 270
- US-A1- 2015 110 552

## Description

The invention relates to railings comprising a glass rail section. More specifically, the invention relates to an adjustable glass rail structure according to the preamble of claim 1. An adjustable glass rail structure of this type is known from FR 2 930 270 A1.

Glass railings comprise typically a base member used in the fastening of a railing, a glass rail section capable of being fastened to the base member, as well as a handrail capable of being fastened to an upper edge or onto an upper edge region of the glass rail.

Adjusting the vertical straightness of a glass rail section in prior known glass railings is problematic. It is largely the position of a glass rail's base member which determines the vertical straightness of the glass rail to be placed therein, and considerable fluctuation may occur in the vertical or horizontal straightness of a building's fastening surfaces used in mounting the base member. In an effort to correct the position of a base member, use is generally made of various mounting plates between a fastening surface of the building and a base member of the glass railing for ensuring the straightness of the base member. These mounting plates are nevertheless often inconvenient to use and prolong the installation of a glass railing.

One prior known solution for adjusting the vertical straightness of a glass railing's glass rail section is to rest a lower edge of the glass rail section on a bottom of the base member's interior space and to provide vertically movable propping elements in an upper edge region of the base member's interior space on either side of the glass rail section. These propping elements are displaced in vertical direction on either side of the glass rail section by means of screws present on an upper surface of the base member. By moving the base member's propping elements to positions offset from each other in vertical direction, the glass rail section can be inclined with respect to the base member, thereby enabling the straightness of a glass rail section to be corrected after the glass railing has been installed in place. A problem with this solution is nevertheless how to access the screws from each side of the glass railing, especially in conditions with empty space beyond the railing.

Publication FR 2 930 270 A1 discloses a glass panel fitting device comprising a base member for securing a glass panel at its place, a glass panel to be placed in the base member, and fastening portion providing a wedge for fixing the glass panel to the base member. In this solution the vertical straightness of the glass panel is adjusted via two curving surfaces formed with parts located inside the base member prior to fixing of the glass panel to the base member.

US patent application publication 2001025953 A1 discloses a glass railing assembly, comprising an immovably fastenable base member, a rail section of glass panels to be mounted on the base member, a fastening member with a wedge type action to be fitted between a sidewall of the base member's interior space and the glass rail section, as well as a propping element to be fitted between a sidewall of the base member's interior space and the glass rail section's second side surface, wherein the fastening member and the propping element are capable of being tilted or inclined for adjusting a vertical orientation of the rail section with respect to the base member.

It is one objective of the invention to provide an adjustable glass rail structure, wherein the drawbacks and problems of systems known from the prior art have been eliminated or at least minimized.

It is one specific objective of the invention to create an adjustable glass rail structure, wherein the fastening assembly is of such a design that mounting the glass rail section in a correct position is simple and reliable in operation.

In order to attain the foregoing and subsequently presented objectives, the method according to the invention is principally characterized by what is set forth in the characterizing clause of claim 1. Preferred embodiments and features of the invention are presented in the sub-claims.

According to the invention, the adjustable glass rail structure comprises a base member securing the glass rail structure in place, a glass rail section to be placed in the base member, as well as fastening members providing a wedge effect and to be fitted between a sidewall of the base member's interior space and a first side surface of the glass rail section, said glass rail structure further comprising a propping element to be fitted between a sidewall of the base member's interior space and a second side surface of the glass rail section, and the sidewalls of the base member's interior space are formed with four curved surfaces which provide a swinging adjustment assembly for vertical adjustment of the glass rail structure's glass rail section, wherein along the curved surfaces are the fastening member and the propping element inclinable for adjusting a vertical orientation of the glass rail section with respect to the base member, and the curved surfaces formed on the base member's side surfaces have their centers of curvature located outside a range defined by the base member in order to achieve a vertical displacement taking place as the fastening member and the propping element are being inclined. According to the invention there is provided an adjustable glass rail structure, wherein the base member's internal surfaces are shaped in such a way that the fastening members and the propping element are displaced in a fashion that is favorable from the standpoint of fastening the rail section securely in its place.

According to one preferred characterizing feature of the invention, the glass rail structure comprises, between the propping element and a second side surface of the glass rail section, a spacer element for increasing friction between the propping element and the second side surface of the glass rail section, and that the glass rail structure comprises a second spacer element between the fastening member and the glass rail section's second side surface.

According to one preferred characterizing feature of the invention, the glass rail structure comprises a locking element added to the fastening member for ensuring the immovability of the fastening portions with respect to the base member after the glass rail section has been secured in its place.

According to one preferred characterizing feature of the invention, the propping element of the glass rail structure comprises a protrusion, said protrusion being configured to adapt to a sidewall of the base member's interior space for holding the propping element stationary prior to placing the glass rail section in the base member, said protrusion being adapted to settle on a respective curved surface of the base member.

According to one preferred characterizing feature of the invention, the glass rail structure has its base member, fastening member and propping element constructed from aluminum profiles.

According to one preferred characterizing feature of the invention, the wedge effect-achieving fastening members of the glass rail structure consist of two fastening portions set against each other, whose abutting surfaces comprise one or more surfaces inclined relative to a vertical orientation of the fastening member, whereby the wedge effect of the fastening member is adjustable by changing a vertical position of these two portions relative to each other.

According to one preferred characterizing feature of the invention, the curved surfaces of the glass rail structure have a radius of curvature of about 80 mm, preferably 80.1 mm.

According to one preferred characterizing feature of the invention, the glass rail structure comprises a locking screw for clamping the wedge effect-achieving fastening portions immovably in a desired position.

In a solution according to the present invention, the glass rail section of a glass railing is supported and fastened in the interior of a glass rail structure's base member in such a way that, in order to support a first side surface of the glass rail section either directly or by way of at least one spacer element, the base member's interior space is fitted with wedge effect-achieving fastening portions, and in order to support a second side surface of the glass rail section, the base member's interior space is fitted with a propping element, whereby the surface defining the base member's interior space comprises four curved surfaces, it being along said curved surfaces that both the fastening member and the propping element are inclined within the base member's interior space for adjusting a vertical orientation of the glass rail section with respect to the base member before the glass rail section is secured in its place with wedge effect.

A solution according to the invention enables the glass rail section of a glass railing to be readily adjusted for its vertical straightness after the glass railing's base member has been secured in place, whereby separate mounting blocks for adjusting the base member's straightness are no longer needed. Once the glass rail section's straightness has been adjusted, the next step will be a final engagement of the glass rail section with the base member by means of a wedge effect of the fastening member.

In a solution according to the invention, the curved surfaces formed on the side faces of a glass rail structure's base member have their centers of curvature located outside of a range defined by the base member. In this context, the range defined by a base member refers to the base member itself as well as to the base member's interior space defined by the base member's external surfaces. Thereby is achieved a displacement of the glass rail structure's fastening member and propping element in vertical direction as the latter are tilted along the curved surfaces of the base member's interior space when adjusting the glass rail section's vertical straightness. This vertical displacement enables a more secure and position-retaining attachment and propping of the glass rail section relative to the base member after a final engagement of the glass rail section.

In a solution according to the invention, between the glass rail structure's propping element and glass rail section is preferably also placed an appropriate material layer making up a spacer block, said material layer increasing friction between the propping element and the glass rail section. This enables a further enhancement of the glass rail section's fixed attachment with respect to the base member. This material layer can be for example a thin plastic film or plastic tape.

In a solution according to the invention, the support element to be placed in the interior space of a glass rail structure's base member has preferably a length which matches the length of a piece of block of the glass rail section placing itself in the glass rail structure's base member. Hence, the propping element supports the glass rail section essentially across its entire length in the base member.

In a solution according to the invention, the glass rail structure's fastening member is preferably supplemented with a clamping means for ensuring a fixed position of the fastening member with respect to the base member after securing the glass rail section in its place. In its simplest form this clamping means is an object making up a protrusion on the fastening member, whereby the resulting protrusion bites into a surface of the glass rail structure's base member in connection with a wedge effect provided by the fastening member.

In a solution according to the invention, the glass rail structure's propping element comprises preferably a protrusion, said protrusion being configured to adapt to a sidewall of the base member's interior space at a respective curved surface for holding the support element stationary prior to placing the glass rail section in the base member. This protrusion enables a placement of the propping element in its position in the base member's interior space without a hazard of the propping element becoming dislodged for example in response to a jolt prior to placing the glass rail section in the base member.

In a glass rail structure of the invention, the glass rail structure has its base member, fastening member and propping element preferably constructed from aluminum profiles. The base member and the propping element are preferably made from a single piece of aluminum profile while the fastening member is preferably made from two separate aluminum profiles to be placed against each other.

In a glass rail structure of the invention, the wedge effect-achieving fastening portions consist preferably of two face-to-face placed elements whose abutting surfaces comprise one or more surfaces inclined relative to a vertical orientation of the fastening member, whereby the fastening member's friction effect is adjustable by changing a vertical position of these two elements relative to each other. This type of wedge effect-achieving fastening arrangement for a glass rail structure is known from example from publications FI 20085637 and EP 2138648.

The invention will now be described by way of example with reference to the accompanying figures, to the details of which the invention is nevertheless not by any means intended to be narrowly limited and in which
fig. 1 shows schematically one adjustable glass rail structure of the invention in a cross-section,
fig. 2 shows schematically some essential components of the adjustable glass rail structure in one preferred example for an adjustable glass rail structure of the invention,
fig. 3 shows schematically one preferred curved surface for a glass rail structure's base member, and
fig. 4 shows schematically one adjustable glass rail structure of the invention in one further developed cross-section.

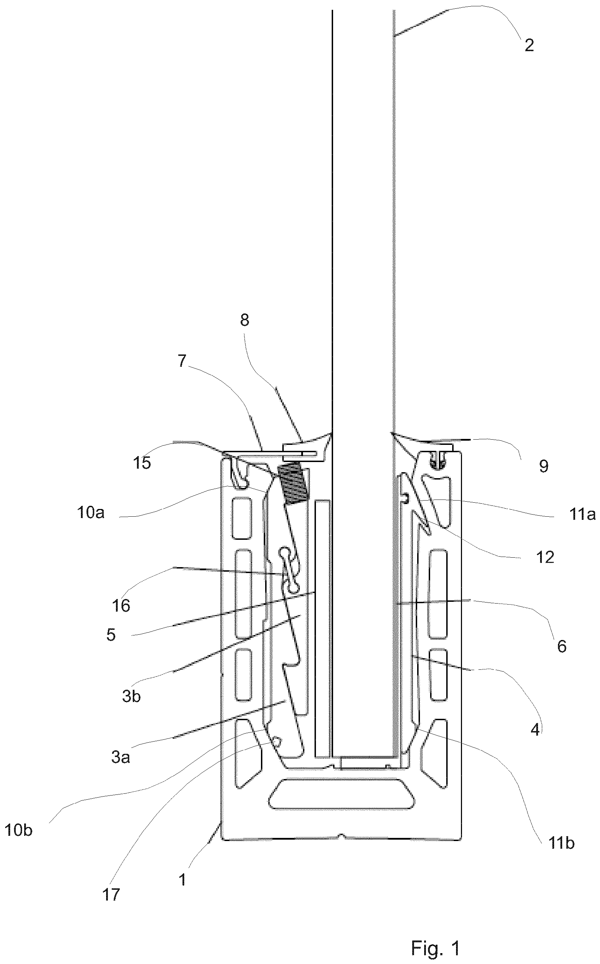

The embodiment for a glass rail structure of the invention depicted in cross-section schematically in fig. 1 comprises a base member 1, a glass rail section 2, a wedge effect-achieving fastening member consisting of portions 3a and 3b, a propping element 4, a spacer element 5, a spacer element 6 which also extends to below the glass rail section, as well as a cover assembly consisting of a lid element 7 and rubber strips 8 and 9.

The base member 1 is configured as an aluminum profile extending in a lengthwise direction perpendicular to the cross-section plane of fig.1, said aluminum profile defining within itself an interior space open at its top surface. Into this interior space of the base member 1 is placed and fastened the glass rail structure's glass rail section 2, which extends as a continuous structure or as pieces of suitable length in a longitudinal direction of the base member. In the lengthwise direction of the glass rail structure are provided one or more base members 1 in succession or spaced from each other.

Vertical adjustability for the glass rail section 2 is achieved with curved surfaces 10a, 10b and 11a, 11b of the base member's 1 interior space, along which the fastening portions 3a, 3b and the propping element 4, which are holding up the glass rail section in the base member, will be able to incline within the base member jointly with the glass rail section. This results in an adjustment assembly swinging upon four fulcrums. The center of curvature of these curved surfaces 10a, 10b and 11a, 11b lies preferably outside the base member 1, whereby tilting of the fastening portions 3a, 3b and the propping element 4 results simultaneously in a displacement of the fastening member and the propping element in vertical direction. This displacement in vertical direction enhances immovability of the glass rail section 2 as the glass rail section has been firmly secured in the base member 1 with a wedge effect of the fastening member 3a, 3b.

The propping element 4 is preferably constructed from an aluminum profile whose length matches essentially that of the glass rail section 2 or a piece of the glass rail section. The propping element 4 has its upper edge preferably formed with a protrusion 12, for which protrusion the base member 1 has a sidewall of its interior space formed with a recess for inserting the protrusion therein. By virtue of this protrusion 12, the propping element 4 can be set in place within the base member's 1 interior space without a risk of its dislodgement before the rail section 2 is placed in the base member's interior space.

Between the propping element's 4 support surface and the glass rail section 2 is preferably placed a spacer element 6 which also extends to below the glass rail section 2. This spacer element 6, consisting preferably of a thin material layer, for example plastic film or plastic tape, increases friction between the propping element 4 and the glass rail section 2 which contributes to retaining the glass rail section in its position after it has been fastened in place.

The sidewall of the base member's 1 interior space to be placed against the propping element 4 is preferably fashioned to comprise fulcrums 11a, 11b for supporting the glass rail section 2 by way of the propping element 4. This provides an improvement in supporting the glass rail section 2 on the base member's 1 structure. Respective fulcrums 10a, 10b are also formed on a sidewall of the base member's 1 interior space to be set against the fastening member 3a, 3b.

Once the glass rail section 2 has been adjusted in terms of its vertical straightness, the glass rail section will be fastened to the base member 1 with a wedge effect achieved by the fastening member 3a, 3b. This wedge effect is achieved by moving the portion 3b downward with respect to the portion 3a, whereby the fastening member 3a, 3b increases in width as the portion 3b is sliding along the inclined abutting surfaces of the fastening portions 3a, 3b. A displacement of the portion 3b relative to the portion 3a is accomplished by rotating a headless bolt (not shown) present in a threaded hole in the upper edge of the portion 3a. The portions 3a and 3b making up the fastening member are attached to each other by way of a piece of rubber 16, which retains the portions in attachment with each other as the fastening member is placed in the base member's 1 interior space, but which piece of rubber allows by stretching the portions 3a and 3b to be moved relative to each other. The portions 3a and 3b making up the fastening member are preferably constructed from aluminum profile. The fastening portions 3a, 3b are clamped immovably in a desired position by means of a clamping screw 15.

Finally, the lid member 7 and the rubber strips 8 and 9, which make up a cover assembly for the base member 1, are installed in position for finishing the glass rail section and its appearance.

It is by using the glass rail structure's spacer elements 5 and 6, which are typically panel type pieces of plastic or rubber, that the area of supporting the glass rail section 2 is made devoid of point loadings, which are caused for example by rock crumbs or metal crumbs and which might considerably weaken the glass rail section or even produce fractures therein.

As shown in fig. 1, the space established in a lower edge of the fastening portion 3a is fitted with an angular piece of steel 17 with one of its edges extending beyond the edge of the fastening portion 3a to establish a sharp protrusion. When the glass rail structure's glass rail section 2 is fastened in place by widening the fastening portions 3a, 3b, the piece of steel 17 has its edge biting into the base member's 1 aluminum material clamping the same in place and enhancing the immovability and ability of the glass rail section 2 to retain its adjusted position. The piece of steel 17 may extend across the entire length of the fastening portions 3a, 3b, or for example in short pieces at each end of the fastening member.

The fastening portions 3a, 3b and the spacer element 5 in terms of its lengthwise extent are preferably configured not to extend over the entire length of the base member 1, but are placed at appropriate locations in the base member's interior space in view of providing sufficient support for the glass rail section 2. Preferably, the fastening portions 3a, 3b and the spacer element 5 have a length of about 20 cm and are placed along the base member's 1 length at a pitch of 40 cm, i.e. at intervals of about 20 cm.

In one of the extreme positions, one side edge of the rail section 2 has its lower part supported by way of the propping element 4 against a lower part of the right-hand wall of the base member's 1 interior space. Therefore, the fastening member 3a, 3b also has its upper portion set against the left-hand wall of the base member's 1 interior space. This position defines a maximal adjustment position to the right for an upper edge of the glass rail section 2 as presented in the figure. In the other extreme position, the glass rail section 2 has its first side edge supported by way of the fastening portions 3a, 3b against a lower part of the left-hand wall of the base member's 1 interior space. At this time, the propping element 4 also has its protrusion 12 completely settled in a groove in the right-hand wall of the base member's 1 interior space and likewise the support element has its upper part supported against an upper part of the right-hand wall of the base member's interior space. This position defines a maximal adjustment position to the left for an upper edge of the glass rail section 2 as presented in the figure. In its extreme positions, the glass rail section 2 supports itself on the glass rail structure's base member 1. This increases the safety of a glass rail structure of the invention because, in the event of a possible adjustment solution failure under a maximum load, the upper edge of the glass rail section only proceeds to either of its maximal adjustment positions and, thus, there cannot occur a failure of the entire rail structure.

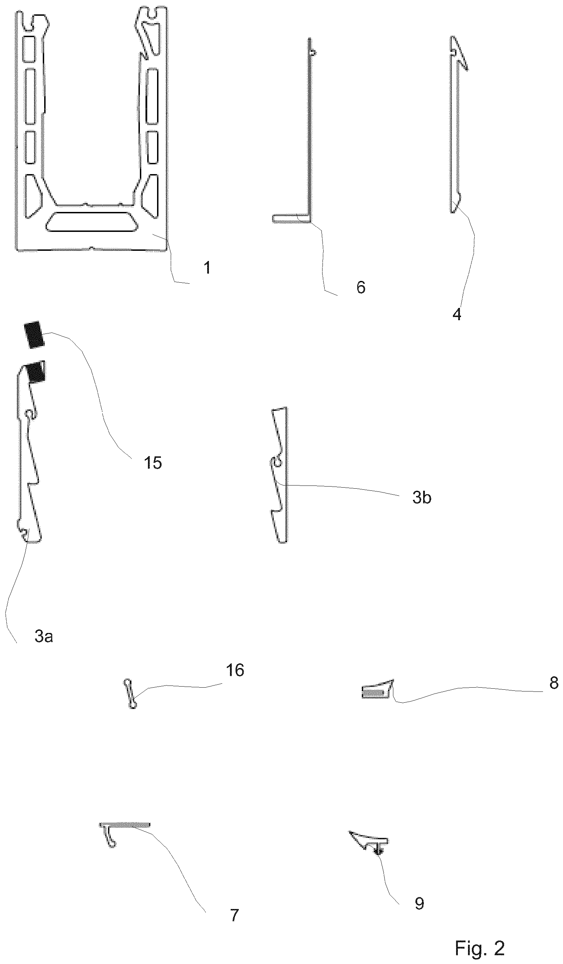

Fig. 2 shows schematically essential components of the adjustable glass rail structure in one preferred example for an adjustable glass rail structure of the invention, said essential components comprising a base member 1 or a frame, fastening portions 3a, 3b or wedge elements to achieve a wedge effect, a propping element 4 or a lens, a spacer element 6 or a lens rubber, a piece of rubber 16 coupling the fastening portions 3a, 3b or a return rubber, a lid member 7 or a surface strip, as well as rubber strips 8, 9 or a surface strip 7, a rubber strip 8 as well as a sealing rubber 9.

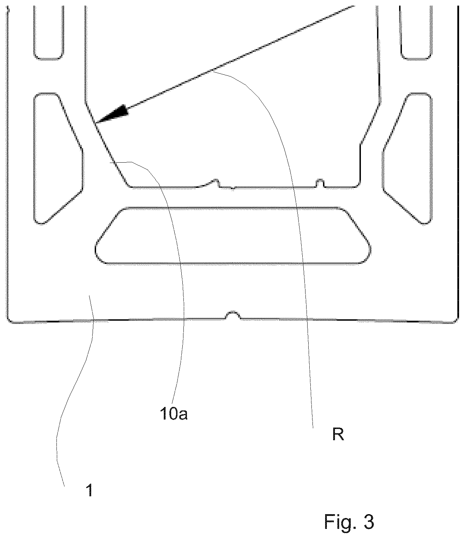

Fig. 3 shows schematically one preferred curved surface 10a for a glass rail structure's base member, whose center of curvature lies preferably outside of the base member 1 and whose radius of curvature R is for example about 80 mm. Other curved surfaces 10b and 11a, 11b (fig. 1) have respectively their centers of curvature lying preferably outside of the base member 1. Preferably, all curved surfaces 10a, 10b, 11a, 11b have the same radius of curvature R, preferably 80.1 mm. This results in an adjustment assembly swinging upon four fulcrums. It is the curved surfaces 10a, 10b, 11a, 11b which enable a tilting motion of the fastening member 3a, 3b and the propping element 4, as well as simultaneously a displacement the fastening member and the propping element in vertical direction. This displacement occurring in vertical direction enhances immovability of the glass rail section 2 after the glass rail section has been secured in the base member 1 with a wedge effect achieved by the fastening member 3a, 3b.

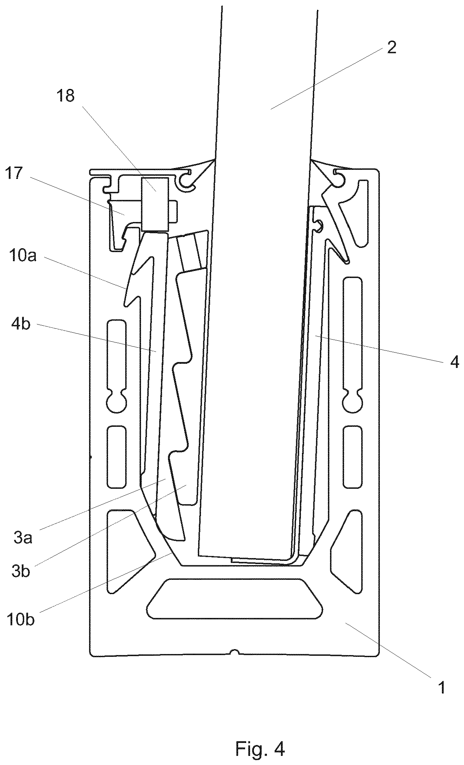

Fig. 4 shows schematically an adjustable glass rail structure, which has been developed further from the embodiment of fig. 1 and which in its essential aspects complies with the embodiment of fig. 1, yet in this embodiment the base member 1 is supplemented between its curved surfaces 10a, 10b with a propping element 4b which in essential aspects complies with the propping element 4 present on the opposite side of the glass rail section 2.

In addition, the base member 1 has its upper edge supplemented with a locking element 17, which has in association therewith a clamping screw 18 capable of preventing the propping element 4b and the fastening portions 3a, 3b from climbing upward under loading. This further enhances a coupling of the glass rail section 2 with the base member 1 and retaining a position of the rail section even at major rail loadings.

Regarding the embodiments depicted in the figures and described above, it should be appreciated that these are not intended to limit the invention in any way. The scope of protection for the invention is only limited by the appended claims.

## Claims

1. An adjustable glass rail structure, said glass rail structure comprising a base member (1) securing the glass rail structure in place, a glass rail section (2) to be placed in the base member, as well as fastening portions (3a, 3b) providing a wedge effect and to be fitted between a sidewall of the base member's interior space and a first side surface of the glass rail section, said glass rail structure comprising a propping element (4) to be fitted between a sidewall of the base member's (1) interior space and a second side surface of the glass rail section (2), **characterized in that** four curved surfaces (10a, 10b, 11a, 11b) formed on the sidewalls of the base member's (1) interior space form a swinging adjustment assembly for vertical straightness adjustment of the glass rail structure's glass rail section, wherein along the curved surfaces (10a, 10b, 11a, 11b) the fastening portions (3a, 3b) and the propping element (4) are inclinable for adjusting the vertical orientation of the glass rail section (2) with respect to the base member (1), and **in that** the curved surfaces (10a, 10b, 11a, 11b) formed on the base member's (1) side surfaces have their centres of curvature located outside an area defined by the base member in order to achieve a vertical displacement of the fastening member (3a, 3b) and the propping element (4) as they are being inclined.

2. A glass rail structure according to claim 1, **characterized in that** the glass rail structure comprises, between the propping element (4) and a second side surface of the glass rail section (2), a spacer element (6) for increasing friction between the propping element (4) and the second side surface of the glass rail section (2), and that the glass rail structure comprises a second spacer element (5) between the fastening portion (3b) and an opposite side surface of the glass rail section (2).

3. A glass rail structure according to claim 1 or 2, **characterized in that** the glass rail structure comprises a locking element (17) added to the fastening member (3a, 3b) for ensuring the immovability of the fastening member with respect to the base member (1) after the glass rail section (2) has been secured in its place.

4. A glass rail structure according to any of claims 1-3, **characterized in that** the propping element (4) comprises a protrusion (12), said protrusion being configured to adapt to a sidewall of the base member's (1) interior space for holding the propping element stationary prior to placing the glass rail section (2) in the base member, said protrusion (12) being adapted to settle on a respective curved surface (11a) of the base member (1).

5. A glass rail structure according to any of claims 1-4, **characterized in that** the glass rail structure has its base member (1), fastening portions (3a, 3b) and propping element (4) constructed from aluminum profiles.

6. A glass rail structure according to any of claims 1-5, **characterized in that** the wedge effect-achieving fastening members consist of two fastening portions (3a, 3b) set against each other, whose abutting surfaces comprise one or more surfaces inclined relative to a vertical orientation of the fastening member, whereby the wedge effect is adjustable by changing a vertical position of these two portions relative to each other.

7. A glass rail structure according to any of claims 1-6, **characterized in that** the curved surfaces (10a, 10b, 11a, 11b) have a radius of curvature of about 80 mm, preferably 80.1 mm.

8. A glass rail structure according to any of claims 1-7, **characterized in that** the glass rail structure comprises a locking screw (15) for clamping the wedge effect-achieving fastening portions (3a, 3b) immovably in a desired position.

## Patentansprüche

1. Einstellbare Glasschienenstruktur, wobei die Glasschienenstruktur ein Basiselement (1) umfasst, das die Glasschienenstruktur an Ort und Stelle befestigt, ein Glasschienenabschnitt (2), der in dem Basiselement angeordnet werden soll, sowie Befestigungsabschnitte (3a, 3b), die einen Keileffekt bereitstellen und zwischen einer Seitenwand des Innenraums des Basiselements und einer ersten Seitenfläche des Glasschienenabschnitts angebracht werden, wobei die Glasschienenstruktur ein Stützelement (4) aufweist, das zwischen einer Seitenwand des Innenraums des Basiselements (1) und einer zweiten Seitenfläche des Glasschienenabschnitts (2) einzupassen ist, **dadurch gekennzeichnet, dass** vier gekrümmte Flächen (10a, 10b, 11a, 11b), die an den Seitenwänden des Innenraums des Basiselements (1) ausgebildet sind, eine schwingende Einstellanordnung zur vertikalen Geradheitseinstellung des Glasschienenabschnitts der Glasschienenstruktur bilden, wobei entlang der gekrümmten Flächen (10a, 10b, 11a, 11b) die Befestigungsabschnitte (3a, 3b) und das Stützelement (4) zum Einstellen der vertikalen Ausrichtung des Glasschienenabschnitts (2) in Bezug auf das Basiselement neigbar sind (1), und dadurch, dass die gekrümmten Flächen (10a, 10b, 11a, 11b), die an den Seitenflächen des Basiselements (1) ausgebildet sind, ihre Krümmungszentren außerhalb eines durch das Basiselement definierten Bereichs aufweisen, um eine vertikale Verschiebung des Befestigungselements (3a, 3b) und des Stützelements (4) zu erreichen, wenn sie geneigt werden.

2. Glasschienenstruktur nach Anspruch 1, **dadurch gekennzeichnet, dass** die Glasschienenstruktur zwischen dem Stützelement (4) und einer zweiten Seitenfläche des Glasschienenabschnitts (2) ein Abstandselement (6) zum Erhöhen der Reibung zwischen dem Stützelement (4) und der zweiten Seitenfläche des Glasschienenabschnitts (2) umfasst, und dass die Glasschienenstruktur ein zweites Abstandselement (5) zwischen dem Befestigungsabschnitt (3b) und einer gegenüberliegenden Seitenfläche des Glasschienenabschnitts (2) umfasst.

3. Glasschienenstruktur nach Anspruch 1 oder 2, **dadurch gekennzeichnet, dass** die Glasschienenstruktur ein Verriegelungselement (17) umfasst, das zu dem Befestigungselement (3a, 3b) hinzugefügt ist, um die Unbeweglichkeit des Befestigungselements in Bezug auf das Basiselement (1) sicherzustellen, nachdem der Glasschienenabschnitt (2) an seiner Stelle befestigt wurde.

4. Glasschienenstruktur nach einem der Ansprüche 1-3, **dadurch gekennzeichnet, dass** das Stützelement (4) einen Vorsprung (12) umfasst, wobei der Vorsprung so konfiguriert ist, dass er sich an den Innenraum einer Seitenwand des Basiselements (1) anpasst, um das Stützelement vor dem Platzieren des Glasschienenabschnitts (2) in dem Basiselement stationär zu halten, wobei der Vorsprung (12) dazu ausgebildet ist, sich auf einer jeweiligen gekrümmten Fläche (11a) des Basiselements (1) abzusetzen.

5. Glasschienenstruktur nach einem der Ansprüche 1-4, **dadurch gekennzeichnet, dass** die Glasschienenstruktur ihr Basiselement (1), die Befestigungsabschnitte (3a, 3b) und das Stützelement (4) aus Aluminiumprofilen ausgebildet sind.

6. Glasschienenstruktur nach einem der Ansprüche 1-5, **dadurch gekennzeichnet, dass** die Befestigungselemente, die einen Keileffekt erzielen, aus zwei gegeneinander gerichteten Befestigungsabschnitten (3a, 3b) bestehen, deren Stoßflächen eine oder mehrere Flächen umfassen, die relativ zu einer vertikalen Ausrichtung des Befestigungselements geneigt sind, wodurch die Keilwirkung durch Ändern einer vertikalen Position dieser zwei Abschnitte relativ zueinander einstellbar ist.

7. Glasschienenstruktur nach einem der Ansprüche 1-6, **dadurch gekennzeichnet, dass** die gekrümmten Flächen (10a, 10b, 11a, 11b) einen Krümmungsradius von etwa 80 mm, vorzugsweise 80,1 mm aufweisen.

8. Glasschienenstruktur nach einem der Ansprüche 1-7, **dadurch gekennzeichnet, dass** die Glasschienenstruktur eine Sicherungsschraube (15) umfasst, um die Befestigungselemente (3a, 3b), die einen Keileffekt erzielen, unbeweglich in einer gewünschten Position festzuklemmen.

## Revendications

1. Structure de rail en verre réglable, ladite structure de rail en verre comprenant un élément de base (1) fixant la structure de rail en verre en place, une section de rail en verre (2) à placer dans l'élément de base, ainsi que des parties de fixation (3a, 3b) fournissant un effet de cale et destinées à être ajustées entre une paroi latérale de l'espace intérieur de l'élément de base et une première surface latérale de la section de rail en verre, ladite structure de rail en verre comprenant un élément de soutènement (4) destiné à être ajusté entre une paroi latérale de l'espace intérieur de l'élément de base (1) et une deuxième surface latérale de la section de rail en verre (2), **caractérisée en ce que** quatre surfaces courbes (10a, 10b, 11a, 11b) formées sur les parois latérales de l'espace intérieur de l'élément de base (1) forment un ensemble de réglage oscillant pour le réglage de la rectitude verticale de la section de rail en verre de la structure de rail en verre, sachant que le long des surfaces courbes (10a, 10b, 11a, 11b), les parties de fixation (3a, 3b) et l'élément de soutènement (4) peuvent être inclinés pour régler l'orientation verticale de la section de rail en verre (2) par rapport à l'élément de base (1), et **en ce que** les surfaces courbes (10a, 10b, 11a, 11b) formées sur les parois latérales de l'élément de base (1) présentent des centres de courbure situés à l'extérieur d'une zone définie par l'élément de base pour générer un déplacement vertical de l'élément de fixation (3a, 3b) et de l'élément de soutènement (4) lors de leur inclinaison.

2. Structure de rail en verre selon la revendication 1, **caractérisée en ce que** la structure de rail en verre comprend, entre l'élément de soutènement (4) et une deuxième surface latérale de la section de rail en verre (2), un élément d'écartement (6) destiné à augmenter le frottement entre l'élément de soutènement (4) et la deuxième surface latérale de la section de rail en verre (2), et **en ce que** la structure de rail en verre comprend un deuxième élément d'écartement (5) entre la partie de fixation (3b) et une surface latérale opposée de la section de rail en verre (2).

3. Structure de rail en verre selon la revendication 1 ou 2, **caractérisée en ce que** la structure de rail en verre comprend un élément de verrouillage (17) ajouté à l'élément de fixation (3a, 3b) pour assurer l'immobilité de l'élément de fixation par rapport à l'élément de base (1) une fois que la section de rail en verre (2) a été fixée à sa place.

4. Structure de rail en verre selon l'une quelconque des revendications 1 à 3, **caractérisée en ce que** l'élément de soutènement (4) comprend une saillie (12), ladite saillie étant configurée pour s'adapter à une paroi latérale de l'espace intérieur de l'élément de base (1) afin de maintenir l'élément de soutènement stationnaire avant l'agencement de la section de rail en verre (2) dans l'élément de base, ladite saillie (12) étant adaptée pour se poser sur une surface courbe (11a) respective de l'élément de base (1).

5. Structure de rail en verre selon l'une quelconque des revendications 1 à 4, **caractérisée en ce que** dans la structure de rail en verre, l'élément de base (1), les parties de fixation (3a, 3b) et l'élément de soutènement (4) sont construits à partir de profilés en aluminium.

6. Structure de rail en verre selon l'une quelconque des revendications 1 à 5, **caractérisée en ce que** les éléments de fixation produisant un effet de cale consistent en deux parties de fixation (3a, 3b) montées l'une contre l'autre, dont les surfaces de butée comprennent une ou plusieurs surfaces inclinées par rapport à une orientation verticale de l'élément de fixation, moyennant quoi l'effet de cale peut être réglé en modifiant une position verticale de ces deux parties l'une par rapport à l'autre.

7. Structure de rail en verre selon l'une quelconque des revendications 1 à 6, **caractérisée en ce que** les surfaces courbes (10a, 10b, 11a, 11b) présentent un rayon de courbure d'environ 80 mm, de préférence de 80,1 mm.

8. Structure de rail en verre selon l'une quelconque des revendications 1 à 7, **caractérisée en ce que** la structure de rail en verre comprend une vis de blocage (15) destinée à serrer les parties de fixation produisant un effet de cale (3a, 3b) de façon immobile dans une position souhaitée.
